# FASCICULE DE BREVET EUROPEEN

(11) **EP 1 515 004 B1**
(45) Date de publication et mention de la délivrance du brevet: **09.04.2008**
(21) Numéro de dépôt: 04292175.9
(22) Date de dépôt: 10.09.2004
(51) Int. Cl.: F01D 11/00, F02C 7/28

(54) **Joint de l'étanchéité du type segment annulaire pour le compresseur d'un réacteur**
Dichtung vom Kolbenringtyp für den Verdichter einer Gasturbine
Piston ring type seal for the compressor of a gas turbine

(30) Priorité: 11.09.2003 FR 0310685
(43) Date de publication de la demande: 16.03.2005
(73) Titulaire: SNECMA, 75015 Paris (FR)
(72) Inventeur: Lepetre, Gilles, 91860 Epinay-sous-Senart (FR); Hernandez, Didier, 77720 Quiers (FR)
(74) Mandataire: Barbin le Bourhis, Joël

(56) Documents cités:
- EP-A- 0 974 736
- CA-A- 1 221 034
- DE-A- 2 603 867
- GB-A- 2 011 553
- US-A- 4 502 276
- US-A- 4 613 280

## Description

L'invention se rapporte à un turboréacteur comportant d'amont en aval, l'amont et l'aval étant définis par le sens de la circulation du flux primaire, un compresseur à haute pression, une grille de diffuseur et une chambre de combustion, ledit compresseur à haute pression comportant une virole externe délimitant radialement la veine dudit flux primaire et raccordée à une structure annulaire qui s'étend radialement vers l'extérieur, ladite grille de diffuseur comportant dans le prolongement axial de ladite virole externe de compresseur un carter externe raccordé à un jambage conique orienté vers l'arrière et délimitant en amont le fond de ladite chambre de combustion, ledit jambage étant lui-même raccordé à une virole externe de carter qui s'étend vers l'amont et est fixée à ladite structure annulaire par des moyens de fixation, ledit jambage, ladite virole externe de carter et ladite structure annulaire définissant une cavité autour de ladite grille de diffuseur, des orifices de prélèvement d'air étant ménagés dans ledit jambage pour mettre en communication le fond de chambre avec ladite cavité, ladite virole externe de carter étant équipée de bouches de sortie de l'air prélevé, et des moyens d'étanchéité étant prévus entre ladite structure annulaire et ledit carter externe de grille de diffuseur pour isoler ladite cavité de la veine du flux primaire.

Le prélèvement d'air nécessaire à la cabine de l'avion équipé d'au moins un turboréacteur est effectué en fond de chambre de combustion dans une zone où il perturbe le moins le rendement global du moteur. Le prélèvement s'effectue par les orifices du jambage, ce qui permet une implantation aisée des bouches de sortie de l'air prélevé. Cette disposition impose une étanchéité relative entre la veine du compresseur à haute pression et la cavité située au-dessus de la grille du diffuseur.

Cette étanchéité est d'autant plus difficile à réaliser que les déplacements relatifs entre la grille de diffuseur et la virole externe du compresseur sont de l'ordre de 1,5 mm dans la direction axiale et sensiblement du même ordre en radial, du fait des réponses thermiques et mécaniques des différentes pièces dans un environnement soumis à de fortes pressions pouvant atteindre 30 bars et à des températures élevées pouvant atteindre 650°C.

La technologie actuelle retenue pour assurer l'étanchéité entre le compresseur et le carter externe de la grille est du type joint à lamelle et contre-joint appuyés par des ressorts. Cette technologie permet en effet un déplacement suffisamment ample entre les deux pièces.

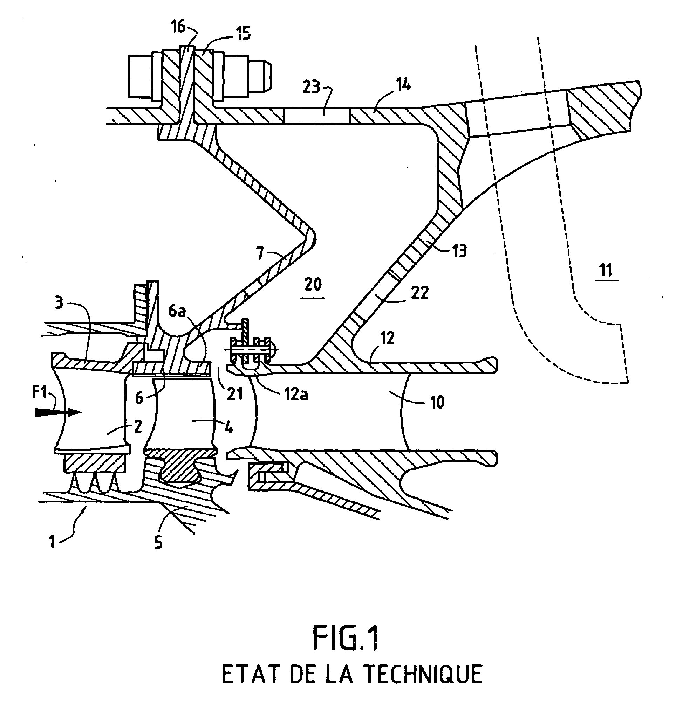

L'état de la technique est illustré par la figure 1 qui montre le dernier étage d'un compresseur à haute pression 1 d'un turboréacteur présentant, d'amont en aval dans le sens du flux primaire F1, une couronne d'aubes fixes 2 qui s'étendent radialement vers l'intérieur à partir d'un carter externe 3, suivie d'une couronne d'aubes mobiles 4 montées à la périphérie d'une roue de compresseur 5 et s'étendant vers l'extérieur jusqu'à une virole externe 6 de compresseur délimitant radialement avec le carter externe 3 la veine du flux primaire, cette virole externe 6 étant raccordée à une structure annulaire 7, ayant une section en V dans le plan contenant l'axe du turboréacteur, et s'étendant radialement vers l'extérieur et qui est fixée au carter externe du moteur par boulonnage.

En aval du compresseur 1 est prévue une grille de diffuseur 10 qui reçoit de l'air comprimé du compresseur 1 et la délivre vers une chambre de combustion 11. La grille 10 présente dans le prolongement axial de la virole externe 6 du compresseur 1 un carter externe 12 raccordé à un jambage conique 13 orienté vers l'arrière du turboréacteur, ce jambage 13 définit la paroi amont du fond de la chambre de combustion 11 et il est raccordé dan sa région radialement extérieure à une virole externe 14 de carter qui s'étend vers l'amont, et qui présente une bride amont 15 servant à la fixation par boulonnage de l'ensemble constitué par la chambre de combustion et le diffuseur sur une bride 16 radialement extérieure de la structure annulaire 7.

Une cavité 20, entourant la grille de diffuseur 10 est ainsi délimitée axialement par la structure annulaire 7 et le jambage 13, radialement à l'extérieur par la virole externe 14 de carter et radialement à l'intérieur par la portion aval 6a de la virole externe 6 de compresseur et par la portion amont 12a du carter externe 12, un interstice 21 séparant ces deux portions.

Le jambage 13 présente des orifices 22 de prélèvement d'air en fond de chambre et la virole externe 14 de carter est équipée de bouches de sortie 23 pour fournir un débit d'air pour l'aération de la cabine de l'avion ou pour le refroidissement d'autres éléments du turboréacteur.

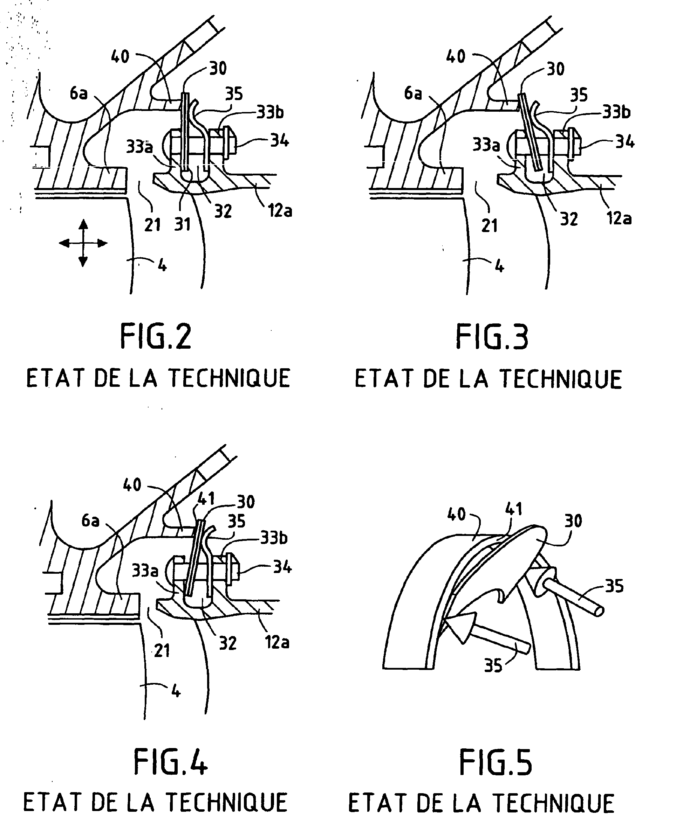

L'étanchéité entre la veine de compresseur et la cavité 20 est assurée, ainsi que cela est montré en détail sur la figure 2, par un joint sectorisé à lamelles 30 doublées de contrejoints 31, monté sur le pourtour de la portion amont 12a du carter externe 12 de la grille de diffuseur. A cet effet, cette portion aval 12a présente sur son pourtour une gorge 32 délimitée par deux brides, référencées 33a en amont et 33b en aval, qui comportent des perçages pour la fixation de rivets 34. Les lamelles 30 et les contrejoints 31 sont maintenus en appui sur la face aval de la bride amont 33a par des ressorts 35, et sont retenus par les rivets 34. Les ressorts 35 sont également retenus par les rivets 34. La portion radialement interne de la structure annulaire 7 présente un becquet annulaire 40 qui s'étend axialement dans la cavité 20 et dont l'extrémité se trouve au-dessus de la bride amont 33a en l'absence de déplacement axial entre la virole externe 6 du compresseur 1 et le carter externe 12 du diffuseur, comme cela est montré sur la figure 2.

Les ressorts 35 appuient sur les joints dans la zone annulaire séparant le becquet 40 de la bride amont 33a. D'autre part la pression de l'air est légèrement supérieure dans la cavité 20 par rapport à la pression dans la veine au niveau de l'interstice 21.

Les appuis des joints 30 côté becquet 40 et côté bride amont 33a comportent des surfaces convexes. Les efforts conjugués des ressorts 35 et de l'écart des pressions sur les deux faces des joints 30 appliquent les lamelles 30, qui sont planes, sur ces surfaces dans la configuration montrée sur la figure 2, ce qui assure l'étanchéité.

Dans certaines phase de vol, l'appui entre les lamelles 30 et le becquet 40 laisse un jeu de fuite, notamment lorsque le becquet 40 passe au-dessus de la gorge 32, comme cela est montré sur les figures 4 et 5. Entre deux ressorts consécutifs, les lamelles 30 s'écartent du becquet et seule la différence de pression entre les deux faces qui est faible peut empêcher la création de cet écartement. Il se produit alors un jeu de fuite 41 entre les lamelles et l'extrémité du becquet 40.

Lorsqu'au contraire la grille de diffuseur 10 s'éloigne du compresseur 1, comme cela est visible sur la figure 3, l'effort dû à l'écart de pression et l'effort des ressorts 35 permettent une étanchéité correcte, par déformation des lamelles 30.

Les doubles flèches montrées sur la figure 2 indiquent les déplacements relatifs axial et radial entre l'extrémité aval de la virole externe 6 de compresseur et l'extrémité amont du carter externe 12 de la grille de diffuseur 10.

Il est à noter en outre que la disposition de cette étanchéité portée par le carter externe 12 permet le montage de l'ensemble chambre de combustion et diffuseur, sur le compresseur par déplacement axial relatif dudit ensemble par rapport au compresseur, puis par boulonnage des brides externes 15 et 16.

Par ailleurs, CA-A-1 221 034 décrit un compresseur muni d'un joint annulaire d'étanchéité en contact avec la surface interne d'un manchon fixe.

Le but de l'invention est de proposer un turboréacteur, tel que mentionné dans l'introduction, dans lequel l'étanchéité entre la cavité de prélèvement d'air et la veine du flux primaire dans le compresseur est assurée, quelle que soit la position en relation entre la virole externe du compresseur et le carter externe de la grille du diffuseur.

L'invention atteint son but par le fait que les moyens d'étanchéité comportent un segment annulaire fendu en sorte de présenter deux languettes susceptibles de coulisser l'une sur l'autre lors d'une compression dudit segment, en ce que la partie radialement interne dudit segment loge de manière radialement coulissante et étanche dans une rainure prévue à la périphérie de la partie amont du carter externe de la grille du diffuseur, en ce que la périphérie dudit segment est en appui sur la surface interne d'un manchon cylindrique solidaire de la structure annulaire et entourant ledit segment.

Le diamètre extérieur du segment, à l'état libre, est légèrement supérieur au diamètre intérieur du manchon. Par effet ressort, la périphérie du segment appuie positivement contre la surface interne du manchon et le segment est toujours centré par rapport au manchon. En cas de déplacement radial relatif entre le carter externe du diffuseur et le manchon, le segment coulisse dans la rainure. En cas de déplacement axial relatif entre ces deux éléments, le segment coulisse dans le manchon.

D'autres avantages et caractéristiques de l'invention ressortiront à la lecture de la description suivante faite à titre d'exemple et en référence aux dessins annexés dans lesquels :
les figures 1 à 5 montrent l'état de la technique :
   la figure 1 étant une demi-coupe, selon un plan contenant l'axe du turboréacteur, de la partie aval d'un compresseur et du diffuseur, qui montre l'implantation de la cavité communiquant avec le fond de la chambre et dans lequel on prélève l'air pour la cabine de l'avion, et l'installation du joint d'étanchéité, selon l'état de la technique, entre cette cavité et la veine du flux primaire ;
   la figure 2 montre à plus grande échelle la disposition du joint d'étanchéité selon l'état de la technique ;
   la figure 3 montre la déformation du joint en cas d'augmentation de l'interstice entre la virole externe du compresseur et le carter externe de la grille du diffuseur ;
   la figure 4 montre la déformation de ce même joint en cas de diminution de cet interstice ; et
   la figure 5 est une vue en perspective du joint d'étanchéité en cas de diminution de l'interstice qui montre le jeu de fuite ;
   La figure 6 est une vue en coupe de la zone extérieur de la veine du flux primaire, située entre le compresseur et le diffuseur, et montre le système d'étanchéité proposé par l'invention ; et
   la figure 7 montre en perspective une partie du segment fendu.

Les figures 1 à 5 montrant l'état de la technique ont été commentées ci-dessus et ne nécessitent d'autres explications.

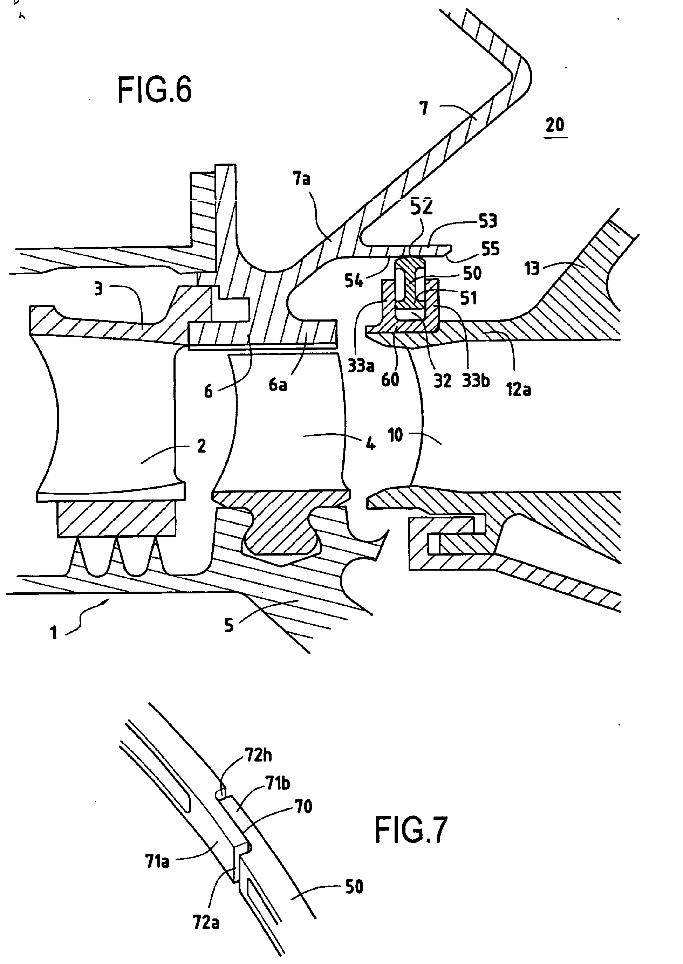

Les figures 6 et 7 montrent le dispositif d'étanchéité proposé par l'invention, les éléments identiques à ceux représentés sur les figures 1 à 5 portent les mêmes références.

La partie amont 12a du carter externe (12) de la grille (10) du diffuseur comporte à sa périphérie une rainure 32 délimitée par une bride amont 33a et une bride aval 33b. Ces deux brides peuvent être les ailes d'un anneau 60 présentant une gorge périphérique 32 et qui est soudé à la périphérie de la partie amont 12a.

La rainure 32 est destinée à recevoir de manière coulissante et étanche la partie 51 radialement intérieure d'un segment fendu 50, de section en I et dont la périphérie présente de préférence une surface convexe 52.

La partie 7a radialement interne de la structure annulaire 7, qui est sensiblement conique et parallèle au jambage 13, comporte un manchon 53 qui s'étend vers l'aval dans la cavité 20 et qui entoure le segment 50 et les brides 33a et 33b. La surface interne 54 de ce manchon est cylindrique et la périphérie 52 du segment est en appui sur cette surface 54. La surface interne cylindrique 54 se raccorde en aval à une surface tronconique 55 sensiblement parallèle au jambage 13.

Le diamètre extérieur de l'anneau 50, à l'état libre, c'est-à-dire à l'état non monté et sans contrainte est légèrement supérieur au diamètre interne du manchon 53.

A l'état monté, tel que représenté sur la figure 6, l'anneau 50 est comprimé.

La surface tronconique 55 assure la compression de l'anneau 50 dans la rainure 32, lors du montage du diffuseur sur le compresseur par déplacement axial. La dimension de cette surface tronconique 55 et les diamètres extérieur et intérieur de segment 50 sont calculés pour permettre un montage en aveugle du compresseur et du diffuseur.

Le diamètre intérieur du segment 50 et le diamètre extérieur du fond de la rainure 32 sont choisis de manière à permettre un déplacement radial du segment 50 dans la rainure 32 lors du fonctionnement.

La largeur de la partie radialement intérieure 51 du segment 50 est sensiblement égale à celle de la rainure 32, afin d'assurer l'étanchéité dans cette zone et le coulissement radial du segment 50 dans la rainure 32, lors des déplacements radiaux relatifs entre la partie amont 12a du carter externe 12 et le manchon 53, le segment 50 étant guidé par le manchon 53. En cas de déplacement axial relatif entre la partie amont 12a et la virole externe 6 du compresseur, le segment 50, retenu par la rainure 32, coulisse dans le manchon 53.

La figure 7, montre le segment 50 au niveau de la fente 70 réalisée sous la forme d'une découpe radiale de section en Z. Les deux languettes 71a et 71b du segment 50 peuvent coulisser l'une sur l'autre lors de la compression dudit segment. Des jeux 72a et 72h sont prévus entre les extrémités libres des languettes 71a et 71b et les épaulements en vis-à-vis.

## Revendications

1. Turboréacteur comportant d'amont en aval, l'amont et l'aval étant définis par le sens de la circulation du flux primaire, un compresseur (1) à haute pression, une grille de diffuseur (10) et une chambre de combustion, ledit compresseur à haute pression comportant une virole externe (6) délimitant radialement la veine dudit flux primaire et raccordée à une structure annulaire (7) qui s'étend radialement vers l'extérieur, ladite grille de diffuseur comportant dans le prolongement axial de ladite virole externe (6) de compresseur un carter externe (12) raccordé à un jambage (13) conique orienté vers l'arrière et délimitant en amont le fond de ladite chambre de combustion, ledit jambage étant lui-même raccordé à une virole externe de carter (14) qui s'étend vers l'amont et est fixée à ladite structure annulaire (7) par des moyens de fixation, ledit jambage, ladite virole externe de carter et ladite structure annulaire définissant une cavité (20) autour de ladite grille (10) de diffuseur, des orifices (22) de prélèvement d'air étant ménagés dans ledit jambage (13) pour mettre en communication le fond de chambre avec ladite cavité (20), ladite virole externe de carter étant équipée de bouches de prélèvement d'air (23), et des moyens d'étanchéité étant prévus entre ladite structure annulaire (7) et ledit carter externe (12) de grille de diffuseur pour isoler ladite cavité (20) de la veine du flux primaire,
**caractérisé par le fait que** les moyens d'étanchéité comportent un segment annulaire (50) fendu en sorte de présenter deux languettes (71a, 71b) susceptibles de coulisser l'une sur l'autre lors d'une compression dudit segment, en ce que la partie radialement interne (51) dudit segment loge de manière radialement coulissante et étanche dans une rainure (32) prévue à la périphérie de la partie amont (12a) du carter externe (12) de la grille du diffuseur, en ce que la périphérie (52) dudit segment est en appui sur la surface interne (54) d'un manchon (53) cylindrique solidaire de la structure annulaire (7) et entourant ledit segment (50).

2. Turboréacteur selon la revendication 1, **caractérisé par le fait que** la rainure (32) est délimitée par une bride amont (33a) et une bride aval (33b) formées à la périphérie de la partie amont (12a) du carter externe (12).

3. Turboréacteur selon la revendication 2, **caractérisé par le fait que** le segment (50) a une section en I, et sa périphérie comporte une surface convexe.

4. Turboréacteur selon l'une quelconque des revendications 1 à 3, **caractérisé par le fait que** la surface interne (54) du manchon (53) se raccorde en aval à une surface tronconique (55) permettant la compression dudit segment (50) lors de l'assemblage du diffuseur et du compresseur.

5. Turboréacteur selon l'une des revendications 1 à 4, **caractérisé par le fait que** le diamètre extérieur du segment (50) à l'état libre est légèrement supérieur au diamètre intérieur du manchon (53).

## Claims

1. A jet engine comprising, from upstream to downstream (the upstream and downstream directions being defined by the direction of circulation of the primary flow), a high-pressure compressor (1), a diffuser grating (10) and a combustion chamber, said high-pressure compressor comprising an external shell (6) which radially delimits the duct for said primary flow and is connected to an annular structure (7) extending radially outward, said diffuser grating comprising in the axial continuation of said external compressor shell (6) an external casing (12) connected to a rearwardly oriented conical strut (13) delimiting, upstream, the end of said combustion chamber, said strut itself being connected to an external casing shell (14) which extends in the upstream direction and is fastened to said annular structure (7) by fastening means, said strut, said external casing shell and said annular structure defining a cavity (20) around said diffuser grating (10), air bleed orifices (22) being made in said strut (13) in order to bring the end of the chamber into communication with said cavity (20), said external casing shell being equipped with air bleed vents (23), and sealing means being provided between said annular structure (7) and said external diffuser grating casing (12) in order to isolate said cavity (20) from the duct for the primary flow,
**characterised by** the fact that the sealing means comprise a split annular segment (50) so as to have two tongues (71a, 71b) that may slide over one another when said segment is compressed, in that the radially internal part (51) of said segment is housed in a radially sliding and sealed manner in a groove (32) provided at the periphery of the upstream part (12a) of the external casing (12) of the grating of the diffuser, in that the periphery (52) of said segment bears on the internal surface (54) of a cylindrical sleeve (53) which forms part of the annular structure (7) and surrounds said segment (50).

2. The jet engine according to claim 1, **characterised by** the fact that the groove (32) is delimited by an upstream flange (33a) and a downstream flange (33b) which are formed at the periphery of the upstream part (12a) of the external casing (12).

3. The jet engine according to claim 2, **characterised by** the fact that the segment (50) has an I-shaped cross section and its periphery comprises a convex surface.

4. The jet engine according to any one of claims 1 to 3, **characterised by** the fact that the internal surface (54) of the sleeve (53) is connected downstream to a frustoconical surface (55) which allows said segment (50) to be compressed during assembly of the diffuser and the compressor.

5. The jet engine according to any one of claims 1 to 4, **characterised by** the fact that the outside diameter of the segment (50) in the free state is slightly greater than the inside diameter of the sleeve (53).

## Patentansprüche

1. Turbostrahltriebwerk, das von stromaufwärts nach stromabwärts - wobei stromaufwärts und stromabwärts durch die Richtung der Zirkulation des Primärstroms definiert sind - einen Hochdruckverdichter (1), ein Diffusorgitter (10) und eine Brennkammer aufweist, wobei der Hochdruckverdichter einen Außenring (6) aufweist, der den Kanal des Primärstroms radial begrenzt und der mit einer ringförmigen Struktur (7) verbunden ist, die sich radial nach außen erstreckt, wobei das Diffusorgitter in der axialen Verlängerung des Außenrings (6) des Verdichters ein Außengehäuse (12) aufweist, das mit einer nach hinten gerichteten konischen Stütze (13), die stromaufwärts den Boden der Brennkammer begrenzt, verbunden ist, wobei die Stütze selbst mit einem Gehäuseaußenring (14) verbunden ist, der sich stromaufwärts erstreckt und durch Befestigungsmittel an der ringförmigen Struktur (7) befestigt ist, wobei die Stützte, der Gehäuseaußenring und die ringförmige Struktur einen Hohlraum (20) um das Diffusorgitter (10) herum definieren, wobei Luftentnahmeöffnungen (22) in der Stütze (13) ausgebildet sind, um den Kammerboden mit dem Hohlraum (20) zu verbinden, wobei der Gehäuseaußenring mit Luftentnahmeöffnungen (23) versehen ist und Dichtungsmittel zwischen der ringförmigen Struktur (7) und dem Außengehäuse (12) des Diffusorgitters vorgesehen sind, um den Hohlraum (20) von dem Kanal des Primärstroms zu isolieren, **dadurch gekennzeichnet, daß** die Dichtungsmittel ein Ringsegment (50) umfassen, das derart geschlitzt ist, daß es zwei Zungen (71 a, 71 b) aufweist, die geeignet sind, bei einem Zusammendrücken des Segments aufeinander zu gleiten, daß der radial innere Teil (51) des Segments radial gleitend und dicht in einer Nut (32) lagert, die am Umfang des stromaufwärtigen Teils (12a) des Außengehäuses (12) des Diffusorgitters vorgesehen ist, daß der Umfang (52) des Segments in Anlage an der Innenfläche (54) einer Zylinderhülse (53) ist, die mit der ringförmigen Struktur (7) fest verbunden ist und das Segment (50) umgibt.

2. Turbostrahltriebwerk nach Anspruch 1, **dadurch gekennzeichnet, daß** die Nut (32) durch einen stromaufwärtigen Flansch (33a) und einen stromabwärtigen Flansch (33b) begrenzt ist, die am Umfang des stromaufwärtigen Teils (12a) des Außengehäuses (12) gebildet sind.

3. Turbostrahltriebwerk nach Anspruch 2, **dadurch gekennzeichnet, daß** das Segment (50) einen I-förmigen Querschnitt hat und sein Umfang eine konvexe Oberfläche aufweist.

4. Turbostrahltriebwerk nach irgendeinem der Ansprüche 1 bis 3, **dadurch gekennzeichnet, daß** die Innenfläche (54) der Hülse (53) sich stromabwärts an eine kegelstumpfförmige Fläche (55) anschließt, die das Zusammendrücken des Segments (50) bei Zusammenbau des Diffusors und des Verdichters ermöglicht.

5. Turbostrahltriebwerk nach einem der Ansprüche 1 bis 4, **dadurch gekennzeichnet, daß** der Außendurchmesser des Segments (50) im freien Zustand geringfügig größer ist als der Innendurchmesser der Hülse (53).
